# EUROPEAN PATENT APPLICATION

(11) **EP 1 432 093 A1**
(43) Date of publication of application: **23.06.2004**
(21) Application number: 02360361.6
(22) Date of filing: 18.12.2002
(51) Int. Cl.: H02G 3/38

(54) **Protection element, method for laying cables in a groove system and cable layout**

(71) Applicant: ALCATEL, 75008 Paris (FR)
(72) Inventor: Li, Hong, Dr., 41169 Mönchengladbach (DE)
(74) Representative: Brose, Gerhard

(57) **Abstract**

The invention relates to a protection element (4) which is installed over a conduit or cable (5) fitted in a groove (2) formed into solid ground (1), which has the form of a three-walled casing with a top (4a) and two side walls (4b,4c). The invention also relates to a method for laying cables or conduits (5) in a groove system created into solid ground (1) and to a cable layout, consisting of a conduit or cable system, wherein one or more cable or conduits (5) are fitted in grooves (2) which are located at the surface of the laying foundation (1).

## Description

The invention relates to a protection element to be installed over a conduit or cable inside a surface grooves, and to a method for laying cables or conduits in a groove system and a cable layout consisting of a conduit or cable system where one or more cables or conduits are fitted in grooves.

Methods for laying cables or conduits with optical and electrical information cables in grooves of firm laying foundations are known. These methods relate to the laying of cables in highway or urban area road routes by means of mini-trench cutting operations for rapid duct installation, which minimize the impact on traffic. The process involves creating a shallow groove in the asphalt, laying the cable into this groove and sealing it afterwards. For example, European Patent Application EP 0 855 772 describes a process and apparatus for introducing a cable into a channel formed into a heated surface of solid ground such as asphalt, in which the apparatus displaces the material to form the channel, inserts the cable and then reintroduces the displaced material back to refill the channel.

The underlying problem consists in that in these cases the cables are installed directly in small grooves, normally not deep enough and with the cable tightly connected with the street surface, and thus not enough protected from external effects (mechanical, traffic and temperature) which will impact on the groove cable directly. For example, the groove cable may suffer from strong temperate fluctuation on the street surface, which could cause the cable to exceed its maximal elongation margin. A proposed solution for this problem is found in French Patent Application FR 2 750 717 where a thermal protection layer in the form of a tape may be placed over the cable, between the cable and the refilling material. But here the tape layer only protects the cable from the top, leaving the side walls of the groove, which may be in contact with the cable, without protection. Also, the tape layer may not oppose enough resistance to maintain the cable or itself fixed to the bottom of the groove before and after installation.

Furthermore, groove cable structures are not cleanly marked for later discovery and thus exposed to damaged provoked by other civil work on the streets or, in case of cable repair work, this would lead to a very time consuming process because the area has to be carefully excavated.

Starting from the above-mentioned French Patent Application, the present invention therefore proposes a protection element in the form of a three-walled casing which is to be installed over the conduit or cable before sealing the groove, in order to solve the problems described above.

The protection element serves, for example, as an isolation layer between the groove cable or conduit and the filling compound and the groove walls, which allows the groove cable to achieve positive static conditions, i.e. free stretching conditions. A protection element with the characteristics according to the present invention can compensate the mechanical effects on the groove cables, caused on the streets and from the traffic.

It is also an object of the protection element to fix the cable or conduit to the bottom of the groove before sealing and avoid the cable or conduit from heaving out of the groove due to temperature fluctuation during and after the installation of the cable.

Still another object of the protection element is to serve as detective wire so that the groove can be easily identified.

The object is achieved according to the invention by a protection element according to claim 1, a method for laying cables or conduits in a groove system according to claim 5 and a cable layout wherein one or more cable or conduits are fitted in grooves according to claim 6.

Advantageous constructions and solutions are represented in the following figures and illustrated in detail in the description.

An embodiment example of the invention is now explained with the aid of Figs. 1 to 2.

Fig. 1 A,B shows a protection element in the form of a three-walled casing according to the invention.

Fig. 2 A,B shows another possible embodiment for the protection element in the form of a three-walled casing with a different design compared with figure 1.

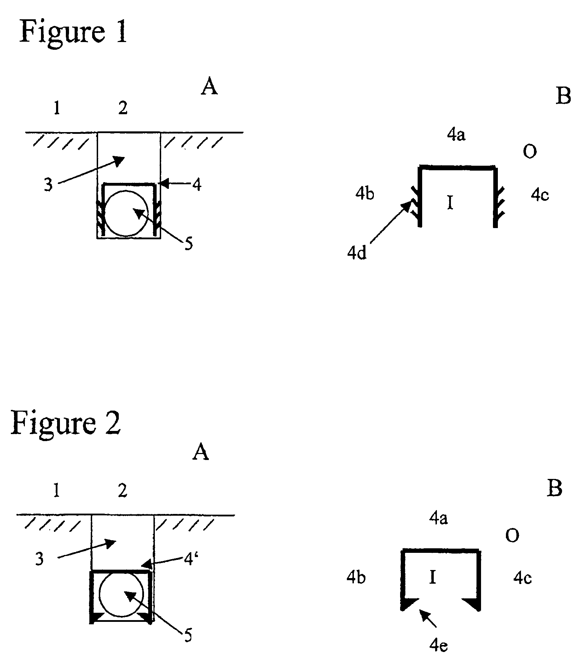

Fig. 1A shows a groove 2 formed into solid ground 1, the groove comprising a cable or conduit 5, a protection element 4 in the form of a three-walled casing and a refilling compound layer 3 over the protection element 4. The protection element 4 shown in figure 1B has the form of a casing, which comprises a top 4a and two side walls 4b,4c, and has three projections 4d sticking out to the outside 0 in the upward direction from each of the side walls 4b,4c.

For example, beginning from a normal road or pavement surface 1, a groove 2 is created using a cutting or heating device. The cable or conduit 5 with the protection element 4 housing it is fitted in the groove 2 and after that, the filling compound 3 will be poured into the groove for sealing.

The protection element 4 can be made of a metallic tape or steel wire net wrapped with elastic foam material, thus allowing it to be used for easy identification of the groove and for cable recovery purposes. But if no identification is needed, it can also be made of hard plastic or hard gummy material.

The protection element 4 is also used to fix the cable to the bottom of the groove 2 before sealing and to keep it in this position afterwards, even if temperature fluctuation occur. The projections 4d oppose more resistance to a possible upward movement forced by the cable or conduit 5.

Fig. 2A shows a groove 2 formed into solid ground 1, the groove comprising a cable or conduit 5, a protection element 4' in the form of a three-walled casing with a different design as compared with figure 1 and a refilling compound layer 3 over the protection element 4'.

The particular embodiment of the protection element 4' shown in figure 2B has the form of a casing, which comprises a top 4a and two side walls 4b,4c, and has at least one projection 4e sticking out to the inside I from each of the side walls 4b,4c, which oppose also resistance to a possible upward movement forced by the cable or conduit 5.

## Claims

1. Protection element (4,4') which is to be installed over a conduit or cable (5) fitted in a groove (2) formed into solid ground (1) **characterized in that** it has the form of a three-walled casing with a top (4a) and two side walls (4b,4c).

2. Protection element (4) according to claim 1 **characterized in that** the casing has at least two projections (4d) sticking out to the outside (0) in the upward direction from each of the side walls (4b,4c).

3. Protection element (4') according to claim 1 **characterized in that** the casing has a projection (4e) sticking out to the inside (I) from each of the side walls (4b,4c) in the side looking at the cable or conduit.

4. Protection element (4,4') according to claim 1 **characterized in that** the casing is made out of steel wire net wrapped with elastic foam material, hard plastic, hard gummy or metal.

5. Method for laying cables or conduits (5) in a groove system created into solid ground (1) in which the cable or conduit (5) is fitted first at the bottom of the groove (2), then a covering is laid over said cable or conduit and finally a filling compound (3) is poured into the groove for sealing, caracterized in that said covering is a protection element (4,4') according to claim 1.

6. Cable layout, consisting of a conduit or cable system, wherein one or more cables or conduits (5) are fitted in grooves (2) which are located at the surface of the laying foundation (1), wherein the cable or conduit (5) has a covering over it sustaining the groove filling compound (3), **characterized in that** said covering is a protection element (4,4') according to claim 1.

## Amended claims

### Amended claims under Art. 19.1 PCT

**1.** Protection element (4') which is to be installed over a conduit or cable (5) fitted in a groove (2) formed into solid ground (1) and has the form of a three-walled casing with a top (4a) and two side walls (4b,4c) **characterized in that** the casing has a projection (4e) sticking out to the inside (I) from each of the side walls (4b,4c) in the side looking at the cable or conduit.

**2.** Protection element (4') according to claim 1 **characterized in that** the casing is made out of steel wire net wrapped with elastic foam material, hard plastic, hard gummy or metal.

**3.** Method for laying cables or conduits (5) in a groove system created into solid ground (1) in which the cable or conduit (5) is fitted first at the bottom of the groove (2), then a covering is laid over said cable or conduit and finally a filling compound (3) is poured into the groove for sealing, **caracterized in that** said covering is a protection element (4') according to claim 1.

**4.** Cable layout, consisting of a conduit or cable system, wherein one or more cables or conduits (5) are fitted in grooves (2) which are located at the surface of the laying foundation (1), wherein the cable or conduit (5) has a covering over it sustaining the groove filling compound (3), **characterized in that** said covering is a protection element (4') according to claim 1.
